(19) Europäisches Patentamt / European Patent Office / Office européen des brevets

(11) **EP 3 566 844 A1**

(12) **EUROPEAN PATENT APPLICATION**
published in accordance with Art. 153(4) EPC

(43) Date of publication:
**13.11.2019 Bulletin 2019/46**

(51) Int Cl.:
**B29C 43/12** (2006.01)   **B29C 43/18** (2006.01)
**B29C 43/56** (2006.01)

(21) Application number: **17899460.4**

(22) Date of filing: **08.11.2017**

(86) International application number:
**PCT/JP2017/040225**

(87) International publication number:
**WO 2018/163506 (13.09.2018 Gazette 2018/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.03.2017 JP 2017046680**

(71) Applicant: **Mitsubishi Heavy Industries, Ltd.**
**Chiyoda-ku**
**Tokyo**
**100-8332 (JP)**

(72) Inventor: **TERASAKA, Akihiro**
**Tokyo 108-8215 (JP)**

(74) Representative: **Henkel & Partner mbB**
**Patentanwaltskanzlei, Rechtsanwaltskanzlei**
**Maximiliansplatz 21**
**80333 München (DE)**

(54) **COMPOSITE MATERIAL PRESSURIZING DEVICE AND COMPOSITE MATERIAL FORMING METHOD**

(57) A first pressure transmission member (8) is formed of a soft material that is softer than the material of a second pressure transmission member (11). The second pressure transmission member (11) has an area that is larger than that of the first pressure transmission member (8), and includes a pressurizing surface (11a) in contact with the first pressure transmission member (8), and a pressure receiving surface (11b), which is disposed on the reverse side of the pressurizing surface (11a), and which faces a bag material (13), said pressure receiving surface (11b) having an area that is larger than that of the pressurizing surface (11a).

FIG. 1

## Description

### Technical Field

The present invention relates to a composite material pressurizing device and a composite material forming method.

Priority is claimed on Japanese Patent Application No. 2017-046680, filed on March 10, 2017, the content of which is incorporated herein by reference.

### Background Art

In the related art, a composite material member made of a composite material containing resin is formed (including processing, mending, and bonding) in a vacuum atmosphere or using an autoclave (for example, refer to PTL 1).

PTL 1 discloses a vacuum forming in which a site requiring a repair due to containing air bubbles or being damaged is covered with a patch made of a reinforcing fiber such as carbon fiber, the patch is infiltrated with resin and is covered with a membrane-like bag material, an internal space of the bag material is vacuumized to degas the patch and the resin, the patch and the resin are pressurized, and then the resin is cured.

Because the vacuum forming is performed in a surrounding atmosphere environment at the atmospheric pressure, defects such as voids easily occur in the composite material member, which is a problem.

If a composite material member is formed using an autoclave, the forming is performed in an atmosphere at 6 to 7 atm, and thus it is possible to prevent defects such as voids from occurring in the composite material member, and to perform the forming with high quality.

### Citation List

### Patent Literature

[PTL 1] PCT Japanese Translation Patent Publication No. 2008-531337

### Summary of Invention

### Technical Problem

If an autoclave is used, and the size of a composite material member to be formed is large, because it becomes difficult to accommodate the composite material member in the autoclave, the forming cannot be performed, which is a problem.

An object of the present invention is to provide a composite material pressurizing device and a composite material forming method which allow a composite material member to be formed with good accuracy while preventing defects from occurring in the composite material member independent of the size of the composite material member.

### Solution to Problem

According to one aspect of the present invention, in order to solve the problems, there is provided a composite material pressurizing device used to form a composite material member made of a composite material containing resin, the device including a first pressure transmission member disposed in contact with a forming region of the composite material member; a second pressure transmission member having a plate shape, being in contact with the first pressure transmission member, and pressurizing the composite material member via the first pressure transmission member; a bag material covering the first pressure transmission member and the second pressure transmission member; and a vacuum generation unit generating a vacuum in a space formed between the bag material and the composite material member, in which the first pressure transmission member is formed of a soft material softer than a material of the second pressure transmission member, in which the second pressure transmission member has a larger area than the first pressure transmission member, and includes a pressurizing surface in contact with the first pressure transmission member, and a pressure receiving surface which is disposed on a reverse side of the pressurizing surface, and which faces the bag material, and in which the pressure receiving surface has a larger area than the pressurizing surface.

According to the present invention, the composite material pressurizing device includes the first pressure transmission member; the second pressure transmission member having a larger area than the first pressure transmission member; the bag material; and the vacuum generation unit. Because the first pressure transmission member is formed of a soft material softer than a material of the second pressure transmission member, and the pressure receiving surface of the second pressure transmission member which faces the bag material is sized to have an area larger than the area of the pressurizing surface of the second pressure transmission member which is in contact with the first pressure transmission member, independent of the size of the composite material member, it is possible to move the second pressure transmission member receiving the atmospheric pressure (1 atm) via the bag material, toward the composite material member, and to pressurize the forming region of the composite material member via the first pressure transmission member at a pressure greater than the atmospheric pressure (1 atm). Therefore, independent of the size of the composite material member, it is possible to prevent defects such as air bubbles from occurring in the composite material member containing resin.

A pressure transmitted from the bag material to the second pressure transmission member is amplified at a magnification corresponding to an area ratio (area of the pressure receiving surface/area of the pressurizing surface), that is, the ratio of the area of the second pressure transmission member to the area of the first pressure transmission member, and the amplified pressure is exerted onto the first pressure transmission member. Therefore, it is possible to apply a desired pressure to the forming region of the composite material member by adjusting the ratio of the area of the pressure receiving surface to the area of the pressurizing surface.

In addition, because the forming region of the composite material member is pressurized via the first pressure transmission member formed of a soft material softer than the material of the second pressure transmission member, the forming region of the composite material member can be pressurized at a uniform pressure, and thus the composite material member can be formed with good accuracy.

In the composite material pressurizing device according to the aspect of the present invention, the second pressure transmission member may be formed of a hard material.

Because the second pressure transmission member is formed of a hard material, when the second pressure transmission member is pressed by the bag material, an outer circumferential portion of the second pressure transmission member can be prevented from being bent.

In the composite material pressurizing device according to the aspect of the present invention, the hard material may be a fiber reinforced plastic or metal.

Because a fiber reinforced plastic or metal is used as the hard material, when the second pressure transmission member is pressed by the bag material, the outer circumferential portion of the second pressure transmission member can be prevented from being greatly bent.

In the composite material pressurizing device according to the aspect of the present invention, the second pressure transmission member may include an overhang portion extending further outward than the first pressure transmission member, and the device may further include an inclination preventing member supporting the overhang portion.

Because the inclination preventing member with the configuration is provided, when the second pressure transmission member inclines, the inclination preventing member is capable of preventing the second pressure transmission member from inclining by supporting the overhang portion. Therefore, the forming region of the composite material member can be pressed at a uniform pressure.

In the composite material pressurizing device according to the aspect of the present invention, the first pressure transmission member may be configured such that an inside of a silicone sheet or a membrane is filled with a fluid.

Because the inside of the first pressure transmission member formed of a silicone sheet or a membrane is filled with a fluid, the forming region of the composite material member can be pressed at a uniform pressure.

In the composite material pressurizing device according to the aspect of the present invention, a breather made of a porous material may be provided inside the bag material.

Because the breather made of a porous material is provided inside the bag material, the breather can be utilized as air movement passage, and thus air present in the space formed inside the bag material is allowed to easily move to the outside of the bag material.

As a result, the bag material can be prevented from becoming wrinkled, and thus the surface (being in contact with the bag material) of the second pressure transmission member can be pressed at a uniform pressure.

According to another aspect of the present invention, there is provided a composite material forming method including a step of disposing a first pressure transmission member in contact with a forming region of a composite material member made of a composite material containing resin; a step of disposing a second pressure transmission member having a plate shape and a larger area than the first pressure transmission member, such that the second pressure transmission member is in contact with the first pressure transmission member and the first pressure transmission member is interposed between the second pressure transmission member and the composite material member; a step of disposing a bag material covering the first pressure transmission member and the second pressure transmission member; and a step of moving the second pressure transmission member toward the composite material member via the bag material by causing a vacuum generation unit to generate a vacuum in a space formed between the bag material and the composite material member, and of pressurizing a forming region of the composite material member via the first pressure transmission member, in which the first pressure transmission member is formed of a soft material softer than a material of the second pressure transmission member, and in which a pressure receiving surface of the second pressure transmission member which faces the bag material has a larger area than a pressurizing surface of the second pressure transmission member which is disposed on a reverse side of the pressure receiving surface.

Because the composite material forming method has the configuration, the first pressure transmission member is formed of a soft material softer than the material of the second pressure transmission member, and the pressure receiving surface of the second pressure transmission member which faces the bag material is sized to have an area larger than the area of the pressurizing surface of the second pressure transmission member which is in contact with the first pressure transmission member, independent of the size of the composite material member, it is possible to move the second pressure transmission member toward the composite material member via the bag material, and to pressurize the forming region of the composite material member via the first pressure transmission member at the pressure greater than the atmospheric pressure. Therefore, independent of the size of the composite material member, it is possible to prevent defects such as air bubbles from occurring in the composite material member containing resin.

A pressure transmitted from the bag material to the second pressure transmission member is amplified at a magnification corresponding to an area ratio (area of the pressure receiving surface/area of the pressurizing surface), that is, the ratio of the area of the second pressure transmission member to the area of the first pressure transmission member, and the amplified pressure is exerted onto the first pressure transmission member. Therefore, it is possible to apply a desired pressure to the forming region of the composite material member by adjusting the ratio of the area of the pressure receiving surface to the area of the pressurizing surface.

In addition, because the forming region of the composite material member is pressurized via the first pressure transmission member formed of a soft material softer than the material of the second pressure transmission member, the forming region of the composite material member can be pressurized at a uniform pressure, and thus the composite material member can be formed with good accuracy.

The composite material forming method according to the other aspect of the present invention may further include a step of disposing an inclination preventing member in the composite material member before the step of disposing the bag material, the inclination preventing member supporting an overhang portion of the second pressure transmission member, and the overhang portion extending further outward than the first pressure transmission member.

Because the composite material forming method further includes the step of disposing the inclination preventing member in the composite material member before the step of disposing the bag material, the inclination preventing member supporting the overhang portion of the second pressure transmission member, and the overhang portion extending further outward than the first pressure transmission member, when the second pressure transmission member inclines, the inclination preventing member is capable of preventing the second pressure transmission member from inclining by supporting the overhang portion.

The composite material forming method according to the other aspect of the present invention may further include a step of disposing a breather made of a porous material to cover the first pressure transmission member and the second pressure transmission member, before the step of disposing the bag material.

Because the composite material forming method further includes the step of disposing the breather made of a porous material to cover the first pressure transmission member and the second pressure transmission member, before the step of disposing the bag material, air present in the space formed inside the bag material easily moves to the outside of the bag material, and thus the bag material can be prevented from becoming wrinkled. As a result, the surface (being in contact with the bag material) of the second pressure transmission member can be pressed at a uniform pressure by the bag material.

Advantageous Effects of Invention

According to the present invention, it is possible to form a composite material member with good accuracy while preventing defects from occurring in the composite material member independent of the size of the composite material member.

Brief Description of Drawings

Fig. 1 is a cross-sectional view illustrating a configuration of a composite material pressurizing device according to a first embodiment of the present invention.
Fig. 2 is a flowchart describing a composite material forming method of the first embodiment using the composite material pressurizing device illustrated in Fig. 1.
Fig. 3 is a cross-sectional view illustrating a schematic configuration of a composite material pressurizing device according to a modification example of the first embodiment of the present invention.
Fig. 4 is a cross-sectional view illustrating a schematic configuration of a composite material pressurizing device according to a second embodiment of the present invention.
Fig. 5 is a cross-sectional view illustrating a schematic configuration of a composite material pressurizing device according to a third embodiment of the present invention.

Description of Embodiments

<First Embodiment>

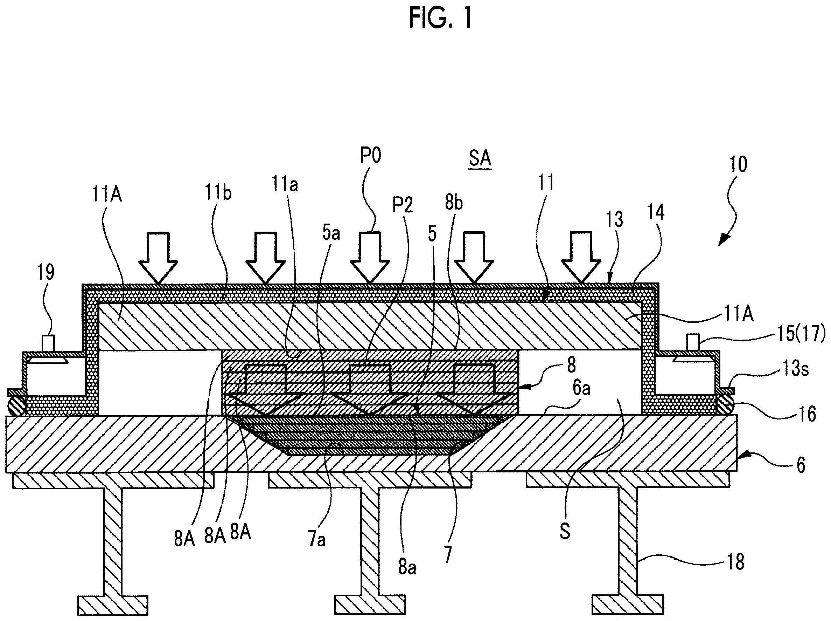

Fig. 1 is a cross-sectional view illustrating a configuration of a composite material pressurizing device according to a first embodiment of the present invention.
As illustrated in Fig. 1, a composite material pressurizing device 10 of the first embodiment is a device for forming a composite material member 6 made of a composite material containing resin.
Examples of the forming of the composite material member 6 include a case where the composite material member 6 is newly manufactured or processed using a composite material containing resin, and a case where when the composite material member 6 manufactured once is damaged, the composite material member 6 which is damaged is to be mended (repaired).

The embodiment shows an example where the composite material member 6 which is damaged is to be restored, and the example will be described hereinbelow.

A fiber reinforced plastic can be exemplified as the composite material containing resin. Carbon fiber reinforced plastic (CFRP) can be used as the fiber reinforced plastic.

The composite material pressurizing device 10 includes a support base 18; a first pressure transmission member 8; a second pressure transmission member 11; a bag material 13; a seal material 16; a breather 14; and a vacuum generation unit 15.

The support base 18 supports a portion (positioned on a reverse side of a portion to be repaired) of the composite material member 6 which contains air bubbles or is damaged.

A surface 6a of the composite material member 6 is damaged (or contains air bubbles), and includes a repair portion 5. The composite material member 6 has a concave portion 7 which is filled with the composite material is to be repaired. The concave portion 7 has a bottom surface 7a. The concave portion 7 is shaped such that the width of the concave portion 7 becomes narrow toward the bottom surface 7a. The repair portion 5 is disposed in the concave portion 7, and is formed of the same composite material as the composite material member 6.

The repair portion 5 has a forming region 5a which is a surface in contact with the first pressure transmission member 8. The forming region 5a of the repair portion 5 is exposed from the surface 6a of the composite material member 6.

The first pressure transmission member 8 is formed of a soft material softer than the material of the second pressure transmission member 11. The first pressure transmission member 8 is disposed between the repair portion 5 and the second pressure transmission member 11. The first pressure transmission member 8 has a plate shape, and can be deformed when receiving an external force.

The first pressure transmission member 8 has a first surface 8a and a second surface 8b. The first surface 8a is in contact with the entire surface of the forming region 5a of the repair portion 5. The first surface 8a is sized to have an area slightly larger than the area of the forming region 5a of the repair portion 5.

When pressed by the second pressure transmission member 11, the first pressure transmission member 8 is pressed against the forming region 5a of the repair portion 5.

The first pressure transmission member 8 can be formed of at least one soft member 8A. Fig. 1 exemplarily illustrates a case where a plurality of the soft members 8A are laminated on top of each other to form the first pressure transmission member 8. A silicone sheet can be used as the soft member 8A.

If the first pressure transmission member 8 is formed of the soft member 8A which is a silicone sheet, the forming region 5a of the repair portion 5 can be pressed at a uniform pressure.

The second pressure transmission member 11 is a plate-shaped member, and is formed of a hard material harder than the soft material of the first pressure transmission member 8.

The second pressure transmission member 11 has a pressurizing surface 11a, and a pressure receiving surface 11b which is disposed on a reverse side of the pressurizing surface 11a, and which faces the bag material 13. A central portion of the pressurizing surface 11a is in contact with the second surface 8b of the first pressure transmission member 8.

The pressurizing surface 11a is shaped to correspond to a desired shape of the forming region 5a of the repair portion 5. If the desired shape of the forming region 5a of the repair portion 5 is a flat surface, the pressurizing surface 11a is shaped into a flat surface. If the desired shape of the forming region 5a of the repair portion 5 is a curved surface, the pressurizing surface 11a is shaped into a curved surface.

The second pressure transmission member 11 is formed to have an outer shape larger than the outer shape of the first pressure transmission member 8. Therefore, the second pressure transmission member 11 has a larger area than the first pressure transmission member 8. The second pressure transmission member 11 has an overhang portion 11A that extends further outward than the first pressure transmission member 8.

When the pressure receiving surface 11b is pressed by the bag material 13, the second pressure transmission member 11 is pressed against the forming region 5a of the repair portion 5 via the first pressure transmission member 8.

The pressurizing surface 11a is part of a surface of the second pressure transmission member 11, which is positioned on a reverse side of the pressure receiving surface 11b and is in contact with the second surface 8b of the first pressure transmission member 8. Therefore, the area of the pressure receiving surface 11b is larger than the area of the pressurizing surface 11a.

A pressure transmitted from the bag material 13 to the second pressure transmission member 11 is amplified at a magnification corresponding to an area ratio ((area of the pressure receiving surface 11b)/(area of the pressurizing surface 11a)), that is, the ratio of the area of the second pressure transmission member 11 to the area of the first pressure transmission member 8.

Therefore, it is possible to apply a pressure greater than the atmospheric pressure (1 atm (0.1 MPa)) (which is applied to the pressure receiving surface 11b of the second pressure transmission member 11) to the forming region 5a of the repair portion 5 by adjusting the area ratio, that is, the ratio of the area of the pressure receiving surface 11b to the area of the pressurizing surface 11a.

When the composite material member 6 is formed using an autoclave, it is possible to prevent defects such as voids from occurring by forming the composite material member 6 in an atmosphere at 6 to 7 atm. If the area ratio (=(area of the pressure receiving surface 11b)/(area of the pressurizing surface 11a)), that is, the ratio of the area of the pressure receiving surface 11b to the area of the pressurizing surface 11a is set to six, a pressure of 6 atm can be applied to the forming region 5a of the repair portion 5.

It is possible to prevent defects such as voids from occurring in the repair portion 5 by applying the pressure to the forming region 5a of the repair portion 5.

The pressure applied to the forming region 5a of the repair portion 5 can be properly set corresponding to the composite material of the repair portion 5, and is not limited to 6 to 7 atm.

As the hard material of the second pressure transmission member 11, a material (material capable of preventing the overhang portion 11A from being bent) is preferably used which enables the overhang portion 11A to be less deformed toward the surface 6a of the composite material member 6 when the pressure receiving surface 11b of the second pressure transmission member 11 receives pressure.

Specifically, carbon fiber reinforced plastic (CFRP), iron, an aluminum alloy, or a stainless alloy can be used as the hard material of the second pressure transmission member 11. If the material is used, the overhang portion 11A can be prevented from being greatly bent toward the surface 6a of the composite material member 6.

The bag material 13 is a sheet formed of an airtight and flexible material. The bag material 13 is disposed to cover the second pressure transmission member 11 and the first pressure transmission member 8. A rubber sheet can be used as the bag material 13.

When a space S formed inside the bag material 13 is vacuumized, the atmospheric pressure (1 atm (0.1 MPa)) is applied to the pressure receiving surface 11b of the second pressure transmission member 11 via the bag material 13.

The seal material 16 is provided between the entire circumference of an outer circumferential edge portion 13s of the bag material 13 and the surface 6a of the composite material member 6. The space S formed inside the seal material 16 is airtight due to the seal material 16. A seal material with both surfaces having adhesive properties can be used as the seal material 16.

The breather 14 is formed of a porous material, and is provided inside the bag material 13. The breather 14 has a function to prevent the bag material 13 from coming into close contact with the second pressure transmission member 11 when the vacuum generation unit 15 generates a vacuum state in the space S. A non-woven fabric or a sponge can be used as the porous material of the breather 14.

Because the breather 14 made of a porous material is provided inside the bag material 13, the breather 14 can be utilized as an air movement passage, and thus air present in the space S formed inside the bag material is allowed to easily move to the outside of the bag material (the space S can be easily vacuumized).

As a result, the bag material 13 can be prevented from becoming wrinkled, and thus the surface (being in contact with the bag material 13) of the second pressure transmission member 11 can be pressed at a uniform pressure.

The vacuum generation unit 15 includes a vacuum generation source (not illustrated) such as a vacuum pump, and a suction port 17 connected to the vacuum generation source. The suction port 17 has a valve that allows air to flow only in a direction from the space S surrounded by the bag material 13 toward the outside of the bag material 13.

The vacuum generation unit 15 generates a vacuum in the space S by driving the vacuum generation source (not illustrated) to suction, via the suction port 17, air present in the space S surrounded by the bag material 13.

In order to monitor the pressure in the space S, the vacuum generation unit 15 includes a monitor port 19, and a pressure gauge (not illustrated) connected to the monitor port 19.

A one-way valve can be used as the monitor port 19. The pressure gauge (not illustrated) measures the pressure in the space S via the monitor port 19.

In the first embodiment, the composite material pressurizing device 10 includes the first pressure transmission member 8; the second pressure transmission member 11 having a larger area than the first pressure transmission member 8; the bag material 13; and the vacuum generation unit 15. Because the first pressure transmission member 8 is formed of a soft material softer than the material of the second pressure transmission member 11, and the pressure receiving surface 11b of the second pressure transmission member 11 which faces the bag material 13 is sized to have an area larger than the area of the pressurizing surface 11a of the second pressure transmission member 11 which is in contact with the first pressure transmission member 8, independent of the size of the composite material member 6, it is possible to move the second pressure transmission member 11 receiving the atmospheric pressure (1 atm) via the bag material 13, toward the composite material member 6, and to pressurize the forming region 5a of the repair portion 5 via the first pressure transmission member 8 at a pressure greater than the atmospheric pressure (1 atm). Therefore, independent of the size of the composite material member 6, it is possible to prevent defects such as air bubbles from occurring in the repair portion 5 containing resin.

The pressure transmitted from the bag material 13 to the second pressure transmission member 11 is amplified at the magnification corresponding to the area ratio (area of the pressure receiving surface 11b/area of the pressurizing surface 11a), that is, the ratio of the area of the second pressure transmission member 11 to the area of the first pressure transmission member 8, and the amplified pressure is exerted onto the first pressure transmission member 8. Therefore, it is possible to apply a desired pressure to the forming region 5a of the repair portion 5 by adjusting the ratio of the area of the pressure receiving surface 11b to the area of the pressurizing surface 11a.

In addition, because the forming region 5a of the repair portion 5 is pressurized via the first pressure transmission member 8 formed of a soft material softer than the material of the second pressure transmission member 11, the forming region 5a of the repair portion 5 can be pressurized at a uniform pressure, and thus the composite material member 6 can be formed with good accuracy.

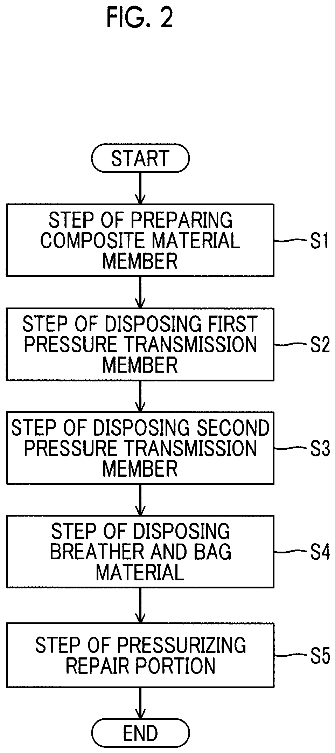

Fig. 2 is a flowchart describing a composite material forming method of the first embodiment using the composite material pressurizing device illustrated in Fig. 1.

Subsequently, the composite material forming method of the first embodiment using the composite material pressurizing device 10 illustrated in Fig. 1 will be described with reference to Figs. 1 and 2. Herein, the composite material forming method of the first embodiment will be described for the example where a portion of the composite material member 6 which contains air bubbles or is damaged is to be repaired.

If the process illustrated in Fig. 2 starts, in S1, the composite material member 6 (composite material member 6 before being repaired) is prepared in which the concave portion 7 is formed.

Specifically, the concave portion 7 is formed by cutting away a targeted repair site of the composite material member 6 which contains air bubbles or is damaged. The concave portion 7 is formed in a bowl shape, the width of which becomes narrow from the surface 6a of the composite material member 6 toward the bottom surface 7a of the concave portion 7.

Subsequently, the repair portion 5 is formed with which the concave portion 7 is filled. The repair portion 5 is formed using the same composite material containing resin as the composite material member 6.

Specifically, a plurality of cloths made of a fiber reinforced material are laminated on top of each other on as needed basis to form a laminated body. The laminated body is not infiltrated with resin in a stage before the laminated body is set in the concave portion 7. The laminated body is infiltrated with resin when being set in the concave portion 7. As a result, the repair portion 5 made of a plurality of layers of the cloths and the resin is formed.

The repair portion 5 may be formed by providing one or more sheets of cloths made of the fiber reinforced material in the concave portion 7, and then infiltrating the cloths with the resin.

Subsequently, in S2, the first pressure transmission member 8 is disposed in contact with the forming region 5a of the repair portion 5 made of the composite material containing the resin. Therefore, the first surface 8a of the first pressure transmission member 8 is in contact with the forming region 5a of the repair portion 5.

Subsequently, in S3, the second pressure transmission member 11 having a plate shape and a larger area than the first pressure transmission member 8 is disposed such that the second pressure transmission member 11 is in contact with the second surface 8b of the first pressure transmission member 8 and the first pressure transmission member 8 is interposed between the second pressure transmission member 11 and the repair portion 5. The first pressure transmission member 8 and the second pressure transmission member 11 are in contact with each other at the center of the second pressure transmission member 11.

Subsequently, in S4, the breather 14 is disposed to cover the first pressure transmission member 8 and the second pressure transmission member 11. Subsequently, the bag material 13 is disposed to cover the breather 14. Therefore, the bag material 13 covers the first pressure transmission member 8 and the second pressure transmission member 11 via the breather 14.

The outer circumferential edge portion 13s of the bag material 13 is in close contact with the surface 6a of the composite material member 6 by the seal material 16. Therefore, the space S is formed between the bag material 13 and the composite material member 6.

Subsequently, in S5, the vacuum generation unit 15 generates a vacuum in the space S inside the bag material 13, and thus the bag material 13 causes the second pressure transmission member 11 to move toward the repair portion 5. Therefore, the forming region 5a of the repair portion 5 is pressurized via the first pressure transmission member 8.

The vacuum generation source (not illustrated) of the vacuum generation unit 15 generates a vacuum state in the space S by suctioning, via the suction port 17, air in the space S surrounded by the bag material 13.

Preferably, the pressure gauge (not illustrated) measures the pressure in the space S via the monitor port 19, and the pressure in the space S is monitored until the pressure in the space S is brought to a predetermined pressure or less which is preset.

Because a vacuum state in the space S is generated, a differential pressure (1 atm) occurs between the pressure in the space S in a vacuum state and the pressure (atmospheric pressure (1 atm)) in an external space SA formed outside the bag material 13.

Because the pressure receiving surface 11b of the second pressure transmission member 11 which faces the bag material 13 is sized to have an area larger than the area of the pressurizing surface 11a of the second pressure transmission member 11 which is in contact with the first pressure transmission member 8, the forming region 5a of the repair portion 5 can be pressurized at a pressure (for example, 6 to 7 atm (0.6 to 0.7 MPa)) greater than the atmospheric pressure (1 atm (0.1 MPa)).

Due to the pressure greater than the atmospheric pressure, air bubbles are prevented from occurring in the repair portion 5, and the repair portion 5 is integrated with the composite material member 6. The composite material member 6 may be heated by a heater (not illustrated) at the time.

The pressure transmitted from the bag material 13 to the second pressure transmission member 11 is amplified at the magnification corresponding to the area ratio (area of the pressure receiving surface 11b/area of the pressurizing surface 11a), that is, the ratio of the area of the second pressure transmission member 11 to the area of the first pressure transmission member 8, and the amplified pressure is exerted onto the first pressure transmission member 8.

Therefore, it is possible to apply a desired pressure to the forming region 5a of the repair portion 5 by adjusting the ratio of the area of the pressure receiving surface 11b to the area of the pressurizing surface 11a.

Specifically, if the area of the pressure receiving surface 11b of the second pressure transmission member 11 is A1, the area (in other words, area of the second surface 8b of the first pressure transmission member 8) of the pressurizing surface 11a is A2, a pressure corresponding to the differential pressure between the pressures exerted onto both surfaces of the bag material 13 is P0 (hereinbelow, referred to as "pressure P0"), a pressure applied from the first pressure transmission member 8 to the repair portion 5 is P2 (hereinbelow, referred to as "pressure P2"), and the pressure P0 is the atmospheric pressure (1 atm = 101.325 kPa), the pressure P2 is expressed by the following equation (1).

$$P2 = (A1/A2) \times P0 \cdots (1)$$

Therefore, if the area A1 of the second pressure transmission member 11 is set to 6 to 7 times the area A2 of the first pressure transmission member 8, the pressure P2 applied from the first pressure transmission member 8 to the repair portion 5 can be amplified to 6 to 7 times the atmospheric pressure (the same pressure as the pressure in the autoclave).

In addition, because the forming region 5a of the repair portion 5 is pressurized via the first pressure transmission member 8 formed of a soft material softer than the material of the second pressure transmission member 11, the forming region 5a of the repair portion 5 can be pressurized at a uniform pressure, and thus the composite material member 6 can be formed with good accuracy.

If the completion of S5 ends, the process illustrated in Fig. 2 ends. After S5, burrs of the cured resin may be ground and removed.

In the composite material forming method of the first embodiment, because the pressure receiving surface 11b of the second pressure transmission member 11 which faces the bag material 13 is sized to have an area larger than the area of the pressurizing surface 11a of the second pressure transmission member 11 which is in contact with the first pressure transmission member 8, independent of the size of the composite material member 6, it is possible to move the second pressure transmission member 11 receiving the atmospheric pressure (1 atm) via the bag material 13, toward the composite material member 6, and to pressurize the forming region 5a of the repair portion 5 via the first pressure transmission member 8 at the pressure greater than the atmospheric pressure (1 atm). Therefore, independent of the size of the composite material member 6, it is possible to prevent defects such as air bubbles from occurring in the repair portion 5 containing resin.

In addition, because the forming region 5a of the repair portion 5 is pressurized via the first pressure transmission member 8 formed of a soft material softer than the material of the second pressure transmission member 11, the forming region 5a of the repair portion 5 can be pressurized at a uniform pressure, and thus the composite material member 6 can be formed with good accuracy.

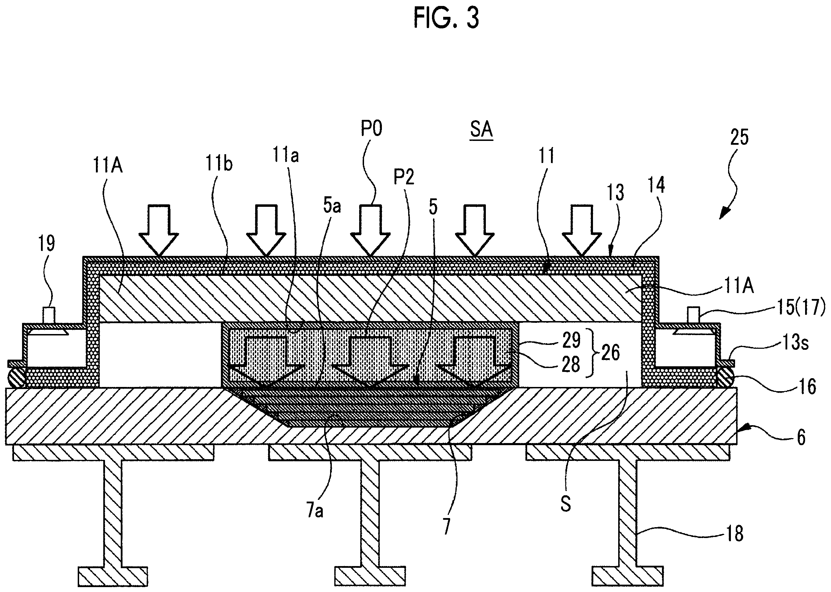

Fig. 3 is a cross-sectional view illustrating a schematic configuration of a composite material pressurizing device according to a modification example of the first embodiment of the present invention. In Fig. 3, the same reference signs will be assigned to the same configuration parts as the structure illustrated in Fig. 1.

A composite material pressurizing device 25 according to the modification example of the first embodiment will be described with reference to Fig. 3.

The composite material pressurizing device 25 according to the modification example of the first embodiment has the same configuration as the composite material pressurizing device 10 of the first embodiment except that the composite material pressurizing device 25 has a first pressure transmission member 26 instead of the first pressure transmission member 8.

The first pressure transmission member 26 has a bag-shaped membrane 29 and a fluid 28. The first pressure transmission member 26 is configured such that the inside of the bag-shaped membrane 29 is filled with the fluid 28. Silicone rubber can be used as the material of the bag-shaped membrane 29.

An incompressible fluid (for example, water) can be used as the fluid 28.

If heating is performed in the composite material forming method of the first embodiment, the bag-shaped membrane 29 preferably has heat resistance equal to or higher than a heating temperature. Similarly, the fluid 28 preferably has a boiling point equal to or higher than the heating temperature.

In the configuration, pressure transmitted from the bag material 13 to the second pressure transmission member 11 is transmitted to the repair portion 5 via the bag-shaped membrane 29 filled with the fluid 28. When the pressure transmitted from the bag material 13 to the second pressure transmission member 11 is exerted onto the bag-shaped membrane 29 filled with the fluid 28, the bag-shaped membrane 29 is deformed to follow the surface shape of the repair portion 5, and the entire surface of the bag-shaped membrane 29 comes into close contact with the forming region 5a of the repair portion 5.

In the composite material pressurizing device 25 according to the modification example of the first embodiment, when the pressure transmitted from the bag material 13 to the second pressure transmission member 11 is exerted onto the bag-shaped membrane 29 filled with the fluid 28, the bag-shaped membrane 29 is deformed to follow the shape of the forming region 5a of the repair portion 5, and comes into close contact with the forming region 5a of the repair portion 5. Therefore, the forming region 5a of the repair portion 5 can be pressed at a uniform pressure.

Even though an amplified pressure is exerted from the bag material 13 onto the second pressure transmission member 11, the fluid 28 is capable of preventing the first pressure transmission member 8 from being crushed.

<Second Embodiment>

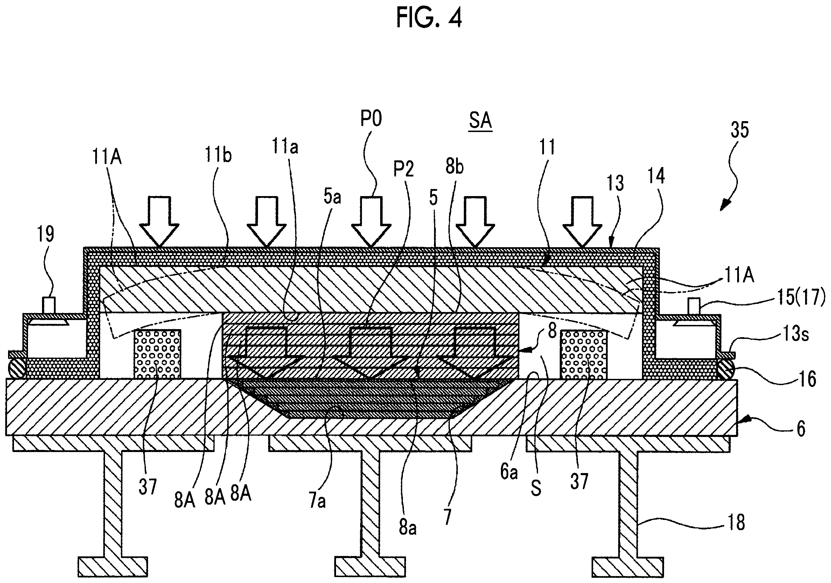

Fig. 4 is a cross-sectional view illustrating a schematic configuration of a composite material pressurizing device according to a second embodiment of the present invention. In Fig. 4, the same reference signs will be assigned to the same configuration parts as in the composite material pressurizing device 10 of the first embodiment illustrated in Fig. 1.

A composite material pressurizing device 35 of the second embodiment has the same configuration as the composite material pressurizing device 10 of the first embodiment except that an inclination preventing member 37 is provided on the surface 6a of the composite material member 6 and is positioned outside of the first pressure transmission member 8.

When the second pressure transmission member 11 inclines, the inclination preventing member 37 prevents the second pressure transmission member 11 from inclining by supporting the overhang portion 11A.

A plurality of the inclination preventing members 37 may be disposed spaced apart from each other in an outer circumferential direction of the first pressure transmission member 8. Alternatively, the inclination preventing member 37 may have an annular shape to surround the outer circumference of the first pressure transmission member 8.

A softer material than the first pressure transmission member 8 can be used as the material of the inclination preventing member 37. For example, a sponge can be used as a specific material.

In the composite material pressurizing device 35 of the second embodiment, because the inclination preventing member 37 is provided to support the overhang portion 11A and to prevent the second pressure transmission member 11 from inclining when the second pressure transmission member 11 inclines, the forming region 5a of the repair portion 5 can be pressed at a uniform pressure.

The composite material pressurizing device 35 of the second embodiment is capable of providing the same effects as the composite material pressurizing device 10 of the first embodiment.

Subsequently, a composite material forming method of the second embodiment using the composite material pressurizing device 35 of the second embodiment will be described with reference to Fig. 2 described above.

The composite material forming method of the second embodiment can be performed by the same technique as the composite material forming method of the first embodiment except that a step of disposing the inclination preventing member 37 is provided between S3 and S4.

In the composite material forming method of the second embodiment, even though the overhang portion 11A is subject to deformation toward the composite material member 6 due to pressure being applied from the bag material 13 to the second pressure transmission member 11, the inclination preventing member 37 is capable of preventing the overhang portion 11A from being deformed.

Therefore, the pressure applied from the bag material 13 is efficiently transmitted from the second pressure transmission member 11 to the first pressure transmission member 8, and thus the forming region 5a of the repair portion 5 can be pressed at a uniform pressure.

Because the inclination preventing member 37 is formed of a softer material than the first pressure transmission member 8, when the overhang portion 11A is deformed due to pressure being applied from the bag material 13 to the second pressure transmission member 11, and comes into contact with the inclination preventing member 37, the pressure can be prevented from being transmitted from the second pressure transmission member 11 to the composite material member 6 via the inclination preventing member 37. Therefore, the forming region 5a of the repair portion 5 can be pressed at a uniform pressure from the second pressure transmission member 11 via the first pressure transmission member 8.

<Third Embodiment>

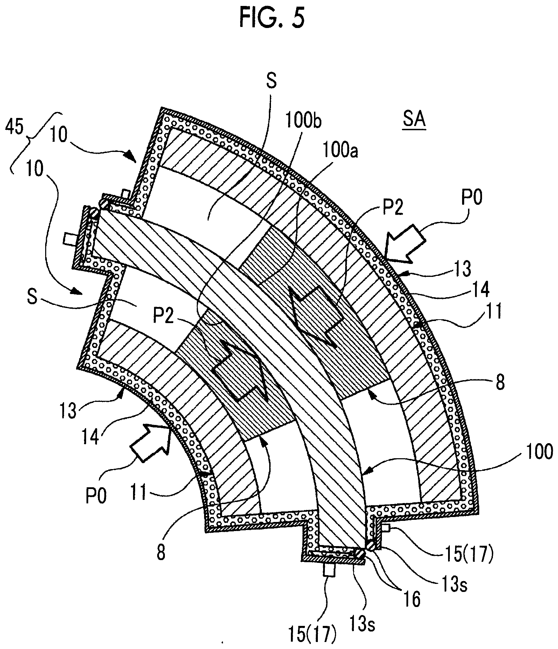

Fig. 5 is a cross-sectional view illustrating a schematic configuration of a composite material pressurizing device according to a third embodiment of the present invention. In Fig. 5, the same reference signs will be assigned to the same configuration parts as in the composite material pressurizing device 10 of the first embodiment illustrated in Fig. 1.

A composite material pressurizing device 45 of the third embodiment has the same configuration as the composite material pressurizing device 10 of the first embodiment except that the composite material pressurizing device 45 has two composite material pressurizing devices 10.

One composite material pressurizing device 10 is in contact with a forming region 100a which is a curved surface of a composite material member 100 which is curved, and the other composite material pressurizing device 10 is in contact with a forming region 100b which is a curved surface of the composite material member 100.

In the third embodiment, the composite material pressurizing device 45 with the configuration is capable of simultaneously forming two forming regions 100a and 100b.

If the composite material pressurizing device 45 of the third embodiment is used, in addition to pressure being simultaneously applied to two forming regions 100a and 100b, it is possible to obtain the same effects as the composite material forming method of the first embodiment described above.

The inclination preventing member 37 described in the second embodiment may be provided in each of the composite material pressurizing devices 10.

The exemplary embodiments of the present invention have been described in detail; however, the present invention is not limited to the specific embodiments, and various modifications and changes can be made without departing from the concept of the present invention described in the claims.

The first to third embodiments have described the examples where the composite material members 6 and 100 are repaired; however, the present invention can be applied to a case where the composite material members 6 and 100 are newly manufactured via forming.

The same pressure as in the autoclave may be applied by the second pressure transmission member 11 being pressed from the outside of the bag material 13.

Hereinbelow, examples and comparative examples will be described. The present invention is not limited to the following examples.

<Example 1>

In Example 1, the composite material pressurizing device 10 illustrated in Fig. 1 was used. The distribution of pressure exerted onto the forming region 5a (forming surface) of the repair portion 5 was evaluated using a pressure measurement film.

The "Prescale LLLW for ultra extreme low pressure" (trade name) manufactured by Fujifilm Ltd was used as the pressure measurement film. The pressure measurement film becomes colored when pressure is applied thereto, and the magnitude of the applied pressure is expressed by color depth. The pressure measurement film was interposed between the repair portion 5 and the first pressure transmission member 8.

The pressure receiving surface 11b of the second pressure transmission member 11 was sized to have an in-plane dimension of 45.5 cm x 25.0 cm. Therefore, the area of the pressure receiving surface 11b was 3,574 cm$^2$.

The pressurizing surface 11a (the second surface 8b of the first pressure transmission member 8) of the second pressure transmission member 11 was sized to have an in-plane dimension of 19.0 cm x 10.0 cm, and the area of the pressurizing surface 11a was 597 cm$^2$, and thus the area ratio, that is, the ratio of the area of the pressure receiving surface 11b of the second pressure transmission member 11 to the area of the pressurizing surface 11a increased to approximately 6 times an area ratio of 1.

As a result of measuring the distribution of pressure, the area of a portion receiving a uniform pressure of approximately 0.6 MPa (6 atm) was approximately 70% when the area of the forming region 5a of the repair portion 5 was assumed to be 100%.

The area of a portion receiving a pressure greater than or equal to 0.5 MPa (5 atm) and less than 0.6 MPa (6 atm) was approximately 20% when the area of the forming region 5a of the repair portion 5 was assumed to be 100%.

The area of a portion receiving a pressure less than 0.5 MPa (5 atm) was approximately 10% when the area of the forming region 5a of the repair portion 5 was assumed to be 100%.

According to the result, approximately 70% of the entire area received a pressure of approximately 0.6 MPa (6 atm), which was a good result.

<Example 2>

In Example 2, the composite material pressurizing device 35 illustrated in Fig. 3 was used. A hard sponge was used as the inclination preventing member 37. Also in Example 2, the distribution of pressure exerted onto the forming region 5a (forming surface) of the repair portion 5 was evaluated using a pressure measurement film. The same pressure measurement film as in Example 1 was used.

As a result of measuring the distribution of pressure, the area of a portion receiving a uniform pressure of approximately 0.6 MPa (6 atm) was approximately 98% when the area of the forming region 5a of the repair portion 5 was assumed to be 100%.

The area of a portion receiving a pressure greater than or equal to 0.5 MPa (5 atm) and less than 0.6 MPa (6 atm) was approximately 2% when the area of the forming region 5a of the repair portion 5 was assumed to be 100%.

The area of a portion receiving a pressure less than 0.5 MPa (5 atm) was approximately 98% when the area of the forming region 5a of the repair portion 5 was assumed to be 100%.

According to the result, approximately 98% of the entire area received a pressure of approximately 0.6 MPa (6 atm), which was a better result than in Example 1.

The result confirmed that it was effective to provide the inclination preventing member 37.

Industrial Applicability

The present invention can be applied to a composite material pressurizing device and a composite material form ing method. Reference Signs List

| 5: | repair portion |
| 5a, 100, 100b: | forming region |
| 6, 100: | composite material member |
| 6a: | surface |
| 7: | concave portion |
| 7a: | bottom surface |
| 8, 26: | first pressure transmission member |
| 8a: | first surface |
| 8b: | second surface |
| 8A: | soft member |
| 10, 25, 35, 45: | composite material pressurizing device |
| 11: | second pressure transmission member |
| 11a: | pressurizing surface |
| 11A: | overhang portion |
| 11b: | pressure receiving surface |
| 13: | bag material |
| 13s: | outer circumferential edge portion |
| 14: | breather |
| 15: | vacuum generation unit |
| 16: | seal material |
| 17: | suction port |
| 18: | support base |
| 19: | monitor port |
| 28: | fluid |
| 29: | bag-shaped membrane |
| 37: | inclination preventing member |
| S: | space |
| SA: | external space |

**Claims**

1. A composite material pressurizing device used to form a composite material member made of a composite material containing resin, the device comprising:

   a first pressure transmission member disposed in contact with a forming region of the composite material member;
   a second pressure transmission member having a plate shape, being in contact with the first pressure transmission member, and pressurizing the composite material member via the first pressure transmission member;
a bag material covering the first pressure transmission member and the second pressure transmission member; and
a vacuum generation unit generating a vacuum in a space formed between the bag material and the composite material member,
wherein the first pressure transmission member is formed of a soft material softer than a material of the second pressure transmission member,
wherein the second pressure transmission member has a larger area than the first pressure transmission member, and includes a pressurizing surface in contact with the first pressure transmission member, and a pressure receiving surface which is disposed on a reverse side of the pressurizing surface, and which faces the bag material, and
wherein the pressure receiving surface has a larger area than the pressurizing surface.

2. The composite material pressurizing device according to claim 1,
   wherein the second pressure transmission member is formed of a hard material.

3. The composite material pressurizing device according to claim 2,
   wherein the hard material is a fiber reinforced plastic or metal.

4. The composite material pressurizing device according to claim 2,
   wherein the second pressure transmission member includes an overhang portion extending further outward than the first pressure transmission member, and
   the device further comprises an inclination preventing member supporting the overhang portion.

5. The composite material pressurizing device according to any one of claims 1 to 4,
   wherein the first pressure transmission member is configured such that an inside of a silicone sheet or a membrane is filled with a fluid.

6. The composite material pressurizing device according to any one of claims 1 to 5,
   wherein a breather made of a porous material is provided inside the bag material.

7. A composite material forming method comprising:

   a step of disposing a first pressure transmission member in contact with a forming region of a composite material member made of a composite material containing resin;
   a step of disposing a second pressure transmission member having a plate shape and a larger area than the first pressure transmission member, such that the second pressure transmission member is in contact with the first pressure transmission member and the first pressure transmission member is interposed between the second pressure transmission member and the composite material member;

a step of disposing a bag material covering the first pressure transmission member and the second pressure transmission member; and

a step of moving the second pressure transmission member toward the composite material member via the bag material by causing a vacuum generation unit to generate a vacuum in a space formed between the bag material and the composite material member, and of pressurizing a forming region of the composite material member via the first pressure transmission member, wherein the first pressure transmission member is formed of a soft material softer than a material of the second pressure transmission member, and

wherein a pressure receiving surface of the second pressure transmission member which faces the bag material has a larger area than a pressurizing surface of the second pressure transmission member which is disposed on a reverse side of the pressure receiving surface.

8. The composite material forming method according to claim 7, further comprising:
a step of disposing an inclination preventing member in the composite material member before the step of disposing the bag material, the inclination preventing member supporting an overhang portion of the second pressure transmission member, and the overhang portion extending further outward than the first pressure transmission member.

9. The composite material forming method according to claim 7 or 8, further comprising:
a step of disposing a breather made of a porous material to cover the first pressure transmission member and the second pressure transmission member, before the step of disposing the bag material.

# FIG. 1

EP 3 566 844 A1

# FIG. 2

```
        ┌──────────────┐
        │    START     │
        └──────────────┘
               │
               ▼
  ┌────────────────────────┐
  │   STEP OF PREPARING    │
  │  COMPOSITE MATERIAL    │──── S1
  │        MEMBER          │
  └────────────────────────┘
               │
               ▼
  ┌────────────────────────┐
  │  STEP OF DISPOSING FIRST │
  │ PRESSURE TRANSMISSION  │──── S2
  │        MEMBER          │
  └────────────────────────┘
               │
               ▼
  ┌────────────────────────┐
  │ STEP OF DISPOSING SECOND │
  │ PRESSURE TRANSMISSION  │──── S3
  │        MEMBER          │
  └────────────────────────┘
               │
               ▼
  ┌────────────────────────┐
  │    STEP OF DISPOSING   │
  │    BREATHER AND BAG    │──── S4
  │       MATERIAL         │
  └────────────────────────┘
               │
               ▼
  ┌────────────────────────┐
  │   STEP OF PRESSURIZING │
  │      REPAIR PORTION    │──── S5
  └────────────────────────┘
               │
               ▼
        ┌──────────────┐
        │     END      │
        └──────────────┘
```

# FIG. 3

EP 3 566 844 A1

FIG. 4

## FIG. 5

## INTERNATIONAL SEARCH REPORT

| International application No. |
| --- |
| PCT/JP2017/040225 |

**A. CLASSIFICATION OF SUBJECT MATTER**
Int. Cl. B29C43/12(2006.01)i, B29C43/18(2006.01)i, B29C43/56(2006.01)i

According to International Patent Classification (IPC) or to both national classification and IPC

**B. FIELDS SEARCHED**

Minimum documentation searched (classification system followed by classification symbols)
Int. Cl. B29C43/12, B29C43/18, B29C43/56

Documentation searched other than minimum documentation to the extent that such documents are included in the fields searched
Published examined utility model applications of Japan        1922-1996
Published unexamined utility model applications of Japan      1971-2017
Registered utility model specifications of Japan              1996-2017
Published registered utility model applications of Japan      1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 84023/1984 (Laid-open No. 915/1986) (KAWASAKI HEAVY INDUSTRIES, LTD.) 07 January 1986, page 3, line 20 to page 5, line 9, fig. 1, 2, (Family: none) | 1-9 |
| Y | JP 5-501994 A (SHORT BROTHERS PLC) 15 April 1993, fig. 4 and relevant passage & GB 8927734 A, fig. 4 and relevant passage | 1-9 |

☐ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11.12.2017 | 19.12.2017 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**EP 3 566 844 A1**

**Patent documents cited in the description**

- JP 2017046680 A
- JP 2008531337 PCT